# FASCICULE DE BREVET EUROPEEN

(11) **EP 2 510 449 B1**
(45) Date de publication et mention de la délivrance du brevet: **22.01.2014**
(21) Numéro de dépôt: 10805275.4
(22) Date de dépôt: 26.11.2010
(51) Int. Cl.: G06F 13/38, G06F 1/16, G06F 9/445

(54) **SYSTÈME BUREAUTIQUE COMPRENANT UNE APPLICATION DE TÉLÉPHONIE**
BÜROAUTOMATISIERUNGSSYSTEM MIT EINER TELEFONIEANWENDUNG
OFFICE AUTOMATION SYSTEM HAVING A TELEPHONY APPLICATION

(30) Priorité: 07.12.2009 FR 0958703
(43) Date de publication de la demande: 17.10.2012
(73) Titulaire: Alcatel Lucent, 75007 Paris (FR)
(72) Inventeur: OLIVIER, François, F-67400 Illkirch (FR)
(74) Mandataire: ALU Antw Patent Attorneys
(86) Numéro de dépôt international: PCT/FR2010/052541
(87) Numéro de publication internationale: WO 2011/070265

(56) Documents cités:
- US-A- 5 671 366
- US-A- 6 044 422
- US-B1- 6 460 109
- US-B1- 7 098 899

## Description

La présente invention concerne un système bureautique apte à exécuter une application préférentielle, telle une application de téléphonie, et particulièrement une utilisation optimale d'un ordinateur portable.

Dans le domaine de la téléphonie, il est connu d'exécuter une application de téléphonie cliente apte à gérer une connectivité avec un serveur de téléphonie afin d'offrir à un utilisateur via des moyens périphériques d'entrée et de sortie des services de communication/téléphonie. Ces services concernent principalement des appels vocaux et/ou vidéo. Il est possible d'ajouter secondairement des services optionnels de médias tels que message court ou SMS, message immédiat ou IM, clavardage ou chat, courriel ou e-mail, diffusion de musique ou MP3, diffusion de vidéo.

Actuellement, une telle application de téléphonie peut s'exécuter sur un terminal téléphonique de bureau. Un tel terminal comprend typiquement une unité de traitement, CPU, un écran d'affichage, un clavier, ainsi qu'un combiné/casque audio comprenant au moins un haut parleur/écouteur et au moins un microphone. Un tel terminal, ainsi dédié à l'application de téléphonie s'avère très performant. Cependant, un tel terminal peut devenir coûteux, notamment lorsqu'il est avantageusement muni d'interfaces de haute qualité (écran couleur large, dalle tactile, clavier numérique et alphanumérique, haut parleur large bande, microphone omnidirectionnel, etc), ce qui limite le nombre d'utilisateur pouvant être équipé d'un tel terminal. De plus un tel terminal conçu pour le bureau n'autorise aucune mobilité.

Une telle application de téléphonie peut encore s'exécuter sur un ordinateur, par exemple portable, qui émule au moyen de périphériques standard les périphériques spécifiques d'un terminal téléphonique et notamment le clavier et le combiné audio. Un inconvénient d'une telle approche est que l'ordinateur exécute aussi d'autres applications en parallèle de l'application de téléphonie. Les moyens/périphériques d'entrée et de sortie de l'ordinateur sont alors partagés entre l'application de téléphonie et les autres applications. Ainsi de manière classique dans un système d'exploitation multifenêtre, une fenêtre est associée à l'application de téléphonie. Cette fenêtre n'est pas nécessairement toujours visible. Le fait de la rendre automatiquement visible lors d'un appel téléphonique perturbe l'organisation du bureau et le déroulement des autres applications. La concurrence pour l'accès aux moyens d'entrée et de sortie de l'ordinateur entraîne une perte d'efficacité tant pour l'application de téléphonie que pour les autres applications. Le document US-A-6460109 décrit un dispositif tel que spécifié dans le préambule de la revendication indépendante 1.

Il est envisageable d'appliquer l'invention à tout type d'application préférentielle pouvant profiter d'une réservation de périphériques d'entrée ou de sortie. Ainsi toute application qui pour des raisons d'efficacité peut profiter d'avoir des moyens d'entrée sortie dédiés, est candidate pour être application préférentielle.

Il est ainsi recherché une solution intermédiaire, permettant d'éviter les inconvénients de ces deux approches. Le problème que tente de résoudre l'invention est de trouver une solution permettant d'offrir des moyens d'entrée et de sortie dédiés à une application préférentielle, sans pour autant recourir à un terminal dédié.

Pour cela il convient de remarquer que de plus en plus d'utilisateurs sont équipés d'un ordinateur portable qui offre des capacités de traitement, d'interface homme machine et de mobilité chaque jour améliorées. Cet ordinateur portable qui peut être un notebook, un laptop, un ultra portable ou encore un mini PC avec dalle tactile, propose une capacité de traitement chaque jour croissante dans une taille de plus en plus réduite. Un avantage de cette réduction de taille est qu'elle favorise la mobilité. Un inconvénient de cette réduction de taille est cependant qu'elle réduit aussi la taille des moyens d'entrée et de sortie intégrés à l'ordinateur portable et réduit ainsi l'ergonomie et le confort de travail pour l'utilisateur.

Aussi, il est de plus en plus fréquent, lorsque l'ordinateur portable est dans un environnement de bureau, de lui connecter des moyens d'entrée additionnels plus confortables, tel un clavier de grande taille, et des moyens de sortie additionnels, tel un écran de plus grande taille et/ou un système de haut parleurs de meilleure qualité, afin de retrouver le confort d'un ordinateur de bureau, dans un mode que l'on nommera mode "fixe".

A contrario, les moyens d'entrée et de sortie intégrés de l'ordinateur portable ne sont utilisés que lorsque l'ordinateur portable n'est pas sur un bureau, et est en mode "mobile".

Un aspect de l'invention est un système bureautique tel que défini dans la revendication indépendante 1. D'autres modes de réalisation de l'invention sont spécifiés dans les revendications dépendantes attenantes.

C'est dans un tel système bureautique, comprenant un ordinateur portable comprenant une unité de traitement apte à exécuter au moins une application préférentielle, un moyen de sortie intégré et un moyen d'entrée intégré, et encore un moyen de sortie additionnel pouvant être sélectivement connecté audit ordinateur portable et un moyen d'entrée additionnel pouvant être sélectivement connecté audit ordinateur portable que peut être mise en oeuvre l'invention.

Le système bureautique selon l'invention est tel que soit les moyens de sortie et d'entrée intégrés à l'ordinateur portable, soit les moyens de sortie et d'entrée additionnels, sont réservés à l'application préférentielle lorsque lesdits moyens de sortie et d'entrée additionnels sont connectés audit ordinateur portable. Ceci correspond au mode "fixe" pouvant être mis en oeuvre dans un environnement de bureau.

Selon une autre caractéristique de l'invention, lorsque les moyens de sortie et d'entrée additionnels ne sont pas connectés audit ordinateur portable, le système bureautique étant alors dans un mode "mobile", les moyens de sortie et d'entrée intégrés sont partagés entre l'application préférentielle et d'éventuelles autres applications.

Selon une autre caractéristique de l'invention, le système bureautique est apte à changer automatiquement de mode entre le mode "fixe" et le mode "mobile" et réciproquement, par détection automatique de l'état de connexion ou de déconnexion des moyens de sortie et d'entrée additionnels.

Un avantage du dispositif selon l'invention est d'offrir une interface dédiée à l'application préférentielle, et donc plus performante, sans pour autant nécessiter l'investissement d'un terminal particulier.

Un autre avantage du dispositif selon l'invention est d'offrir une solution de continuité entre le fonctionnement de bureau en mode "fixe" et connecté et le fonctionnement hors bureau en mode "mobile" et déconnecté.

Selon une autre caractéristique de l'invention, l'application préférentielle est une application de téléphonie.

D'autres caractéristiques, détails et avantages de l'invention ressortiront plus clairement de la description détaillée donnée ci-après à titre indicatif en relation avec des dessins sur lesquels :
- la figure 1 représente un système bureautique selon l'invention en mode "fixe",
- la figure 2 représente le même système bureautique en mode "mobile".

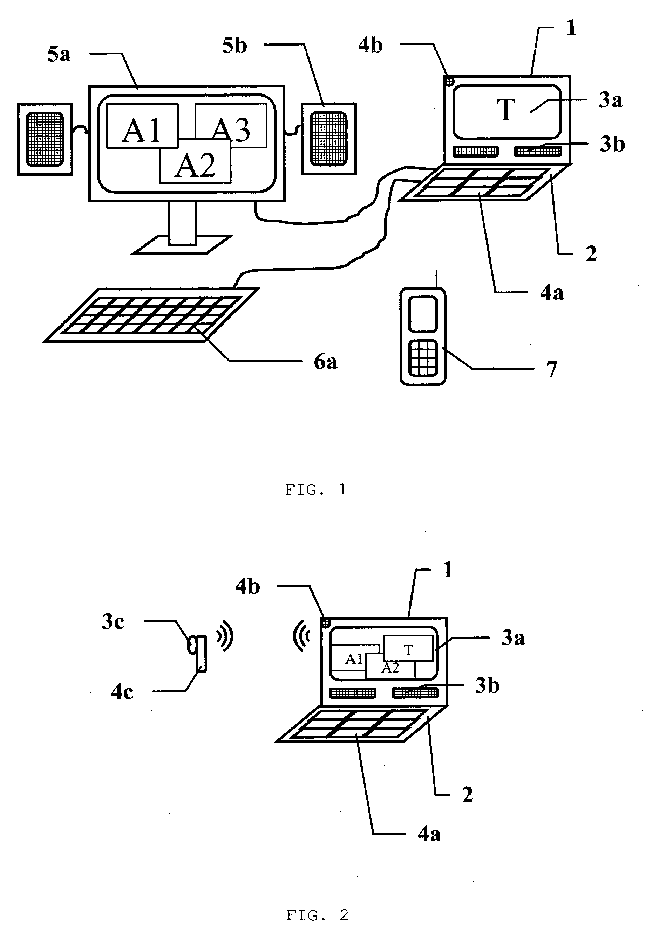

Comme indiqué précédemment et comme illustré à la figure 1, le système bureautique selon l'invention comprend un ordinateur portable 1. Ledit ordinateur portable 1 comprend un moyen de sortie intégré, génériquement désigné 3 et comprenant les composants 3a, 3b, etc, et un moyen d'entrée intégré génériquement désigné 4 et comprenant les composants 4a, 4b, etc. Le système comporte une unité de traitement ou CPU 2, qui est typiquement l'unité de traitement de l'ordinateur portable 1. Cette unité de traitement 2 est capable d'exécuter de manière connue, au moins une application préférentielle T, ainsi que d'autres applications logicielles A1, A2, A3.

Afin d'améliorer le confort d'utilisation, lorsque l'utilisateur est au bureau, ledit ordinateur portable 1 peut être connecté à un moyen de sortie additionnel, génériquement désigné 5 (et comprenant les composants 5a, 5b, etc) et/ou à un moyen d'entrée additionnel, génériquement désigné 6 (et comprenant les composants 6a, etc).

Dans les systèmes de l'art antérieur une telle connexion de moyens additionnels ne réalise qu'un branchement en "parallèle" d'un moyen de sortie intégré 3, respectivement d'un moyen d'entrée intégré 4, et d'un moyen de sortie additionnel 5, respectivement d'un moyen d'entrée additionnel 6. Ainsi par exemple l'affichage apparaissant sur un écran intégré 3a est identique à l'affichage apparaissant sur un écran additionnel 5a, ou encore l'affichage apparaissant sur un écran présente une extension de la zone d'affichage présentée sur l'autre écran. De même l'appui sur une touche d'un clavier intégré 4a produit la même action que l'appui sur la touche correspondante d'un clavier additionnel 6a.

Au contraire, selon une caractéristique essentielle de l'invention, lorsque le système bureautique est en mode "fixe", c'est-à-dire lorsque un moyen de sortie additionnel 5 et un moyen d'entrée additionnel 6 sont connectés à l'ordinateur portable 1, le système bureautique est tel que soit le moyen de sortie intégré 3 et le moyen d'entrée intégré 4, soit le moyen de sortie additionnel 5 et le moyen d'entrée additionnel 6 sont réservés et dédiés de manière exclusive à l'application préférentielle T. Ceci assure que lesdits moyens ainsi réservés, sont en permanence visibles et/ou disponibles, afin que l'utilisateur puisse interagir avec l'application préférentielle T.

A contrario, le moyen de sortie non réservé et le moyen d'entrée non réservé sont utilisables par les autres applications A1, A2, A3.

En se référant maintenant à la figure 2, est figuré le même système bureautique lorsqu'il est déconnecté. Une telle configuration correspond au cas où l'utilisateur dudit ordinateur portable 1 n'est pas dans un environnement de bureau. Dans ce mode dit "mobile", l'ordinateur portable 1 ne peut être connecté aux moyens additionnels et est alors utilisé via son moyen de sortie 3 intégré et son moyen d'entrée 4 intégré, tant pour l'application préférentielle T que pour les autres applications A1, A2, A3, qui se partagent lesdits moyens intégrés 3, 4. Il peut être noté que ce mode mobile est similaire à l'utilisation selon l'art antérieur d'un ordinateur portable 1 exécutant simultanément une application préférentielle T et au moins une autre application A1, A2, A3.

Selon une caractéristique avantageuse de l'invention, le système bureautique peut être apte à changer automatiquement de mode entre le mode "fixe" et le mode "mobile" et réciproquement. Ce changement de mode, entre un mode "fixe" où les moyens réservés, sont dédiés à l'application préférentielle T et un mode "mobile" où les moyens intégrés 3, 4, seuls disponibles sont partagés entre toutes les applications peut s'effectuer automatiquement en fonction de l'état de connexion ou de déconnexion des moyens additionnels 5, 6. Ledit état de connexion ou de déconnexion peut être automatiquement détecté par l'ordinateur portable 1 dès qu'une nouvelle connexion ou déconnexion est réalisée. Ainsi la détection peut par exemple se faire grâce aux interfaces standards : prise audio casque, microphone, haut parleur, qui de par les protocoles de liaisons utilisés : USB, BT, etc., sont le plus souvent capables de détecter une connexion ou une déconnexion.

Un exemple particulièrement intéressant d'application préférentielle est celui d'une application de téléphonie.

Afin de pouvoir exécuter les fonctions d'interface d'une application de téléphonie T, le moyen de sortie réservé3, 5, comprend au moins un moyen de restitution sonore 3b, 3c, 5b. Ce moyen de restitution sonore 3b, 3c, 5b peut être au moins un haut parleur ou encore un écouteur telle une oreillette 3c, 4c, le cas échéant sans fil, ou un casque audio. Ce moyen permet la restitution des éléments sonores d'un appel téléphonique. Le moyen de sortie réservé 3, 5 comprend encore avantageusement un moyen d'affichage 3a, 5a de type écran. Ce moyen d'affichage 3a, 5a est utilisé par l'application de téléphonie T pour afficher les éléments de dialogue de l'application de téléphonie T avec l'utilisateur: menus, affichage d'état, configuration de l'application, etc, en relation avec les opérations de l'utilisateurs sur le moyen d'entrée réservé 4, 6. Il peut encore être utilisé pour restituer une vidéo dans le cas d'une communication vidéo ou d'un MMS.

De même, le moyen d'entrée réservé 4, 6 comprend au moins un moyen de capture sonore 4b. Ce moyen de capture sonore 4b peut être un microphone. Ce dernier peut être dans le cas où le moyen d'entrée est le moyen d'entrée intégré 4, intégré à l'ordinateur portable 1 comme illustré, associé à un casque de tête (non représenté) ou à une oreillette 4c. Il permet la capture des éléments sonores vocaux de l'utilisateur pour un appel téléphonique. Le moyen d'entrée réservé 4, 6 comprend encore avantageusement un moyen de sélection 4a, 6a. Ce moyen de sélection peut être un clavier comme illustré, et/ou encore un dispositif de pointage en relation avec l'affichage 3a, 5a de type souris, pad, joystick, ou encore dalle tactile. Ce moyen de sélection 4a, 6a est utilisé par l'utilisateur pour indiquer à l'application de téléphonie T ses choix de commande ou de configuration de ladite application de téléphonie T. Le moyen d'entrée réservé 4, 6 peut encore comprendre un moyen de capture vidéo (non représenté) dans le cas où l'application de téléphonie T est apte à gérer des communications vidéo.

Ainsi les moyens de sortie 3, 5 et d'entrée 4, 6 réservés comprennent à minima un moyen de restitution sonore 3b, 3c, 5b et un moyen de capture sonore 4b, 4c pour le traitement des communications audio. Ensuite, ils comprennent encore un moyen de sélection 4a, 6a permettant au moins de reproduire un clavier téléphonique avec les chiffres et symboles conventionnels (0-9, *, #, +, etc.) afin de numéroter ainsi que les fonctions dédiées à la téléphonie : appel, raccrocher, bis, etc. Ensuite, ils comprennent encore un moyen d'affichage 3a, 5a qui en relation avec une partie du moyen de sélection 4a, 6a dédié à un dialogue utilisateur étendu, permet de commander et/ou de configurer l'application de téléphonie T afin de réaliser des fonctions étendues de communications telles que conférences, identification et présentation de l'appelant, de l'appelé, affichage des statistiques, gestion d'un répertoire de correspondants, etc.

Les moyens de sortie 5 et d'entrée 6 additionnels sont principalement dédiés à des applications informatiques A1, A2, A3, non téléphoniques. Ils sont avantageusement plus grands et plus confortables que les moyens intégrés correspondant. Ainsi le clavier 6a peut comprendre plus de touches avec certaines supplémentaires dédiées à des fonctions spécifiques (ex. pavé numérique).

Bien que cela ne soit pas strictement nécessaire, le moyen de sortie 5 additionnel comprend de plus en plus souvent un moyen de restitution sonore 5b additionnel. Ce dernier qui peut être plus volumineux que son homologue intégré 3b permet d'obtenir une meilleure qualité sonore. Ainsi il est possible de travailler en écoutant de la musique en haute qualité.

Cependant, si ce moyen de restitution sonore 5b additionnel est employé en parallèle du moyen de restitution sonore intégré 3b, les sons qu'ils diffusent peuvent venir se perturber et ainsi perturber l'audition de l'utilisateur lorsque un appel téléphonique vocal (ou vidéo avec une composante vocale) est en cours, traitée par les moyens de sortie et d'entrée réservés.

Aussi selon une caractéristique avantageuse de l'invention, le système bureautique comprend un moyen de contrôle apte à contrôler le moyen de sortie non réservé. Ce contrôle s'exerce au moins lorsque l'application de téléphonie T traite un appel téléphonique. Ainsi, dès qu'un appel téléphonique comprenant une composante vocale est initié par l'utilisateur (appelant) ou présenté à l'utilisateur (appelé) ce moyen de contrôle peut piloter le moyen de sortie non réservé et particulièrement le moyen de restitution sonore non réservé afin d'inhiber ou de sensiblement réduire son volume sonore. Ainsi seul ou majoritairement le son issu du moyen de restitution sonore réservé reste audible par l'utilisateur pendant le déroulement de l'appel téléphonique.

De même, selon un autre mode de réalisation, le système peut encore comprendre un téléphone mobile 7. Ce téléphone mobile 7 est tel qu'il est apte à être utilisé en doublon de l'application de téléphonie T. Ainsi il peut se connecter au même serveur de téléphonie que l'application de téléphonie T et est apte à réaliser les mêmes fonctions que cette application T. Dans ce cas un appel entrant est présenté sur le téléphone mobile 7 et sur l'ordinateur portable 1 exécutant l'application de téléphonie T. Un appel entrant va ainsi déclencher en parallèle la sonnerie des deux récepteurs possibles : l'application de téléphonie T et le téléphone mobile 7.

Dans le cas de présence d'un tel téléphone mobile 7, le système bureautique est avantageusement apte à configurer ledit téléphone mobile 7, notamment en fonction du mode "fixe" ou "mobile". Ainsi le système bureautique détermine pour chaque fonction si elle doit être réalisée par l'application de téléphonie T, par le téléphone mobile 7 ou par les deux. Ainsi pour reprendre l'exemple de la sonnerie, un appel entrant peut entraîner au choix une sonnerie du téléphone portable 7, de l'application de téléphonie T sur l'ordinateur portable 1 et les moyens réservés, ou encore simultanément sur les deux.

La configuration du téléphone mobile 7 par le système peut s'effectuer de deux manières. Selon la première, le système peut dialoguer directement, par exemple via un lien sans fil, avec le téléphone et le configurer pour activer/inhiber chacune des fonctions de communication. Selon la seconde, le système dialogue uniquement avec le serveur téléphonique auquel il indique de servir, lors d'un appel entrant soit l'application de téléphonie T, soit le téléphone mobile 7, soit encore les deux.

Une telle configuration selon la seconde manière s'applique principalement en mode "fixe", en présence d'un serveur téléphonique pouvant être configuré par le système. En mode "mobile" le serveur téléphonique est typiquement un réseau cellulaire, tel le réseau GSM, ne pouvant pas toujours être configuré. Cependant, dans le cas où une application téléphonique est accessible depuis ce réseau, en utilisant par exemple les capacités des réseaux de transmission data et/ou IMS, et que cette application téléphonique est configurable, les deux modes "fixe" et "mobile", se rejoignent.

Ainsi, par exemple, le téléphone mobile 7 est avantageusement configuré silencieux afin de privilégier l'usage des moyens réservés, lorsque le système est en mode "fixe". A contrario le téléphone mobile 7 retrouve toutes ses fonctionnalités (ce qui est identique à une absence de configuration par le système) en parallèle de l'application de téléphonie T, lorsque le système est en mode "mobile". Ainsi un appel entrant peut être traité sur l'ordinateur mobile 1 ou sur le téléphone mobile 7 sans perturber les applications A1, A2, A3, exécutées sur l'ordinateur portable 1, au choix de l'utilisateur.

Avantageusement, l'application de téléphonie T est apte à se connecter à un serveur téléphonique par tout moyen de connectivité, filaire ou non, disponible. Ainsi elle est capable d'utiliser différents canaux, tels que IP, Wifi, GSM/3G, etc. Il en est de même de manière classique pour le téléphone mobile 7, le cas échéant.

Dans la description qui précède, l'invention a été particulièrement illustrée par des exemples de média principaux de type communication vocale et/ou vidéo. Ce média principal est nécessairement particularisé en ce qu'il nécessite des moyens de sortie et d'entrés sonores.

Cependant une application de téléphonie T peut aussi traiter des medias secondaires tels que SMS, MMS, IM, chat, e-mail, MP3, vidéo. Ces médias, nécessitant des moyens de sortie et d'entrée plus classiques, et surtout étant moins perturbant pour les autres applications A1, A2, A3 du fait qu'ils sont asynchrones, peuvent être configurés pour être traités, au choix de l'utilisateur, par les moyens de sortie 3 et d'entrée 4 intégrés ou par les moyens de sortie 5 et d'entrée 6 additionnels, indépendamment des moyen réservés pour la téléphonie vocale. Le système comprend ainsi des moyens de configuration déterminant pour ces médias secondaires s'ils doivent être dirigés vers les moyens intégrés 3, 4 ou vers les moyens additionnels 5, 6.

## Revendications

1. Système bureautique comprenant un ordinateur portable (1) comprenant une unité de traitement (2) apte à exécuter au moins une application préférentielle (T), un moyen de sortie intégré (3) et un moyen d'entrée intégré (4), ledit système bureautique comprenant encore un moyen de sortie additionnel (5) pouvant être sélectivement connecté audit ordinateur portable (1) et un moyen d'entrée additionnel (6) pouvant être sélectivement connecté audit ordinateur portable (1), ***caractérisé en ce que*** soit lesdits moyens de sortie (3) et d'entrée (4) intégrés, soit lesdits moyens de sortie (5) et d'entrée (6) additionnels, sont réservés à l'application préférentielle (T) lorsque lesdits moyens de sortie (5) et d'entrée (6) additionnels sont connectés audit ordinateur portable (1), selon un mode "fixe".

2. Système bureautique selon la revendication 1, où lesdits moyens de sortie (3) et d'entrée (4) intégrés sont partagés entre l'application préférentielle (T) et d'autres applications (A1, A2, A3) lorsque lesdits moyens de sortie (5) et d'entrée (6) additionnels ne sont pas connectés audit ordinateur portable (1), selon un mode "mobile".

3. Système bureautique selon la revendication **1** ou **2,** apte à changer automatiquement de mode entre le mode "fixe" et le mode "mobile" et réciproquement, par détection automatique de l'état de connexion ou de déconnexion desdits moyens de sortie (5) et d'entrée additionnels (6).

4. Système bureautique selon l'une quelconque des revendications **1** à **3,** où l'application préférentielle est une application de téléphonie (T).

5. Système bureautique selon l'une quelconque des revendications **1** à **4,** où le moyen de sortie réservé comprend un moyen d'affichage (3a, 5a) et un moyen de restitution sonore (3b, 3c, 5b).

6. Système bureautique selon l'une quelconque des revendications **1** à **5,** où le moyen d'entrée réservé comprend un moyen de sélection (4a, 6a) et un moyen de capture sonore (4b, 4c).

7. Système bureautique selon l'une quelconque des revendications **1** à **6,** comprenant un moyen de contrôle apte à contrôler le moyen de sortie non réservé lorsque l'application préférentielle (T) traite un appel téléphonique vocal ou vidéo en cours.

8. Système bureautique selon l'une quelconque des revendications **4** à **7,** comprenant encore un téléphone mobile (7) apte à réaliser les mêmes fonctions que l'application de téléphonie (T) en parallèle de celle-ci, où le système bureautique est apte à configurer ledit téléphone mobile (7) en fonction du mode "fixe" ou "mobile".

9. Système bureautique selon l'une quelconque des revendications **4** à **8,** où l'application de téléphonie (T) est apte à se connecter à un serveur téléphonique via différentes canaux, tels que IP, Wifi, GSM/3G.

10. Système bureautique selon l'une quelconque des revendications **4** à **9,** où les medias secondaires de l'application de téléphonie (T) : SMS, IM, chat, e-mail, MP3, vidéo peuvent être configurés pour être traités sélectivement par les moyens de sortie (3) et d'entrée (4) intégrés ou par les moyens de sortie (5) et d'entrée (6) additionnels.

## Patentansprüche

1. Büroautomatisierungssystem, umfassend einen tragbaren Computer (1) mit einer Verarbeitungseinheit (2), welche dazu ausgelegt ist, mindestens eine bevorzugte Anwendung (T) auszuführen, ein integriertes Ausgabemittel (3) und ein integriertes Eingabemittel (4), wobei das besagte Büroautomatisierungssystem weiterhin ein zusätzliches Ausgabemittel (5), welches selektiv an den besagten tragbaren Computer (1) angeschlossen werden kann, und ein zusätzliches Eingabemittel (6), welches selektiv an den besagten tragbaren Computer (1) angeschlossen werden kann, umfasst, **dadurch gekennzeichnet, dass** entweder die besagten integrierten Ausgabe- (3) und Eingabemittel (4) oder die besagten zusätzlichen Ausgabe- (5) und Eingabemittel (6) gemäß einem "festen" Modus für die bevorzugte Anwendung (T) reserviert sind, wenn die besagten zusätzlichen Ausgabe- (5) und Eingabemittel (6) an den besagten tragbaren Computer (1) angeschlossen sind.

2. Büroautomatisierungssystem nach Anspruch 1, wobei die besagten integrierten Ausgabe- (3) und Eingabemittel (4) gemeinsam von der bevorzugten Anwendung (T) und von weiteren Anwendungen (A1, A2, A3) gemäß einem "mobilen" Modus genutzt werden, wenn die besagten zusätzlichen Ausgabe- (5) und Eingabemittel (6) nicht an den besagten tragbaren Computer (1) angeschlossen sind.

3. Büroautomatisierungssystem nach Anspruch 1 oder 2, welches dazu ausgelegt ist, durch die automatische Erfassung des Anschluss- oder Trennzustands der besagten zusätzlichen Ausgabe- (5) und Eingabemittel (6) zwischen dem "festen" Modus und dem "mobilen" Modus, und umgekehrt, umzuschalten.

4. Büroautomatisierungssystem nach einem beliebigen der Ansprüche **1** bis **3,** wobei die bevorzugte Anwendung eine Telefonieanwendung (T) ist.

5. Büroautomatisierungssystem nach einem beliebigen der Ansprüche **1** bis **4,** wobei das reservierte Ausgabemittel ein Mittel zum Anzeigen (3a,. 5a) und ein Mittel zur akustischen Wiedergabe (3b, 3c, 5b) umfasst.

6. Büroautomatisierungssystem nach einem beliebigen der Ansprüche **1** bis **5,** wobei das reservierte Eingabemittel ein Mittel zum Auswählen (4a, 6a) und ein Mittel zur akustischen Erfassung (4b, 4c) umfasst.

7. Büroautomatisierungssystem nach einem beliebigen der Ansprüche **1** bis **6,** umfassend ein Steuerungsmittel, welches dazu ausgelegt ist, das nicht reservierte Ausgabemittel zu steuern, wenn die bevorzugte Anwendung (T) einen laufenden Sprach- oder Videoanruf verarbeitet.

8. Büroautomatisierungssystem nach einem beliebigen der Ansprüche **4** bis **7,** weiterhin umfassend ein Mobiltelefon (7), welches dazu ausgelegt ist, dieselben Funktionen wie die Telefonieanwendung (T) parallel zu dieser auszuführen, wobei das Büroautomatisierungssystem dazu ausgelegt ist, das besagte Mobiltelefon (7) in Abhängigkeit von dem "festen" oder dem "mobilen" Modus zu konfigurieren.

9. Büroautomatisierungssystem nach einem beliebigen der Ansprüche **4** bis **8,** wobei die Telefonieanwendung (T) fähig ist, sich über verschiedene Kanäle wie beispielsweise IP, Wifi, GSM/3G mit einem Telefonserver zu verbinden.

10. Büroautomatisierungssystem nach einem beliebigen der Ansprüche **4** bis **9,** wobei die sekundären Medien der Telefonieanwendung (T): SMS, IM, Chat, E-Mail, MP3, Video konfiguriert werden können, um selektiv von den integrierten Ausgabe- (3) und Eingabemitteln (4) oder von den zusätzlichen Ausgabe- (5) und Eingabemitteln (6) verarbeitet zu werden.

## Claims

1. An office automation system comprising a portable computer (1) that comprises a processing unit (2) capable of executing at least one preferential application (T), one integrated output means (3) and one integrated input means (4), said office automation system further comprising an additional output means (5) which may selectively be connected to said portable computer (1) and an additional input means (6) which may selectively be connected to said portable computer (1), **characterized in that** either said integrated output means (3) and input means (4), or said additional output means (5) and input means (6), are reserved for the preferential application (T) when said additional output means (5) and input means (6) are connected to said portable computer (1), in accordance with a "fixed" mode.

2. An office automation system according to claim **1,** wherein said integrated output means (3) and input means (4) are shared between the preferential application (T) and other applications (A1, A2, A3) whenever said additional output means (5) and input means (6) are not connected to said portable computer (1), in accordance with a "mobile" mode.

3. An office automation system according to claim **1** or **2,** capable of automatically switching modes between "fixed" mode and "mobile" mode and vice versa, by automatically detecting the connected or disconnected status of said additional output means (5) and input means (6).

4. An office automation system according to one of the claims **1** to **3,** wherein the preferential application is a telephony application (T).

5. An office automation system according to one of the claims **1** to **4,** wherein the reserved output means comprises a display means (3a, 5a) and a sound playback means (3b, 3c, 5b).

6. An office automation system according to one of the claims **1** to **5,** wherein the reserved input means comprises a selection means (4a, 6a) and a sound capture means (4b, 4c).

7. An office automation system according to one of the claims **1** to **6,** comprising a control means capable of controlling the unreserved output means when the preferential application (T) is handling a voice or video call that is underway.

8. An office automation system according to one of the claims **4** to **7,** further comprising a mobile telephone (7) capable of carrying out the same functions as the telephony application (T) in parallel with it, wherein the office automation system is capable of configuring said mobile telephone (7) depending on whether the mode is "fixed" or "mobile".

9. An office automation system according to one of the claims **4** to **8,** wherein the telephony application (T) is capable of connecting to a telephone server via various channels, such as IP, Wi-Fi, GSM/3G.

10. An office automation system according to one of the claims **4** to **9,** wherein the secondary media of the telephony application (T): SMS, IM, chat, e-mail, MP3, video may be configured to be selectively handled by the integrated output means (3) and input means (4) or by the additional output means (5) and input means (6).
